Europäisches Patentamt

European Patent Office

Office européen des brevets

(11) Publication number: **0 050 384**
**B1**

# (12) EUROPEAN PATENT SPECIFICATION

(45) Date of publication of patent specification: **28.05.86**

(21) Application number: **81201104.7**

(22) Date of filing: **06.10.81**

(51) Int. Cl.⁴: **G 01 S 7/28, G 01 S 7/36, G 01 S 13/87, H 01 Q 3/26**

(54) **Elimination in a pulse radar receiver of interference signals stemming from N distinct sources.**

(30) Priority: **17.10.80 NL 8005725**

(43) Date of publication of application:
**28.04.82 Bulletin 82/17**

(45) Publication of the grant of the patent:
**28.05.86 Bulletin 86/22**

(84) Designated Contracting States:
**BE CH DE FR GB IT LI NL SE**

(56) References cited:
**US-A-3 202 990**
**US-A-3 725 922**
**US-A-3 727 220**
**US-A-3 982 245**
**US-A-3 995 271**
**US-A-4 035 799**
**US-A-4 086 592**
**US-A-4 222 051**

**IEEE TRANSACTIONS ON AEROSPACE AND ELECTRONIC SYSTEMS, volume AES-14, nr. 1, January 1978 NEW YORK (US) F.K. KRETSCHMER Jr. et al. "A digital open-loop adaptive processor", pages 165-171**

(73) Proprietor: **HOLLANDSE SIGNAALAPPARATEN B.V.**
**Zuidelijke Havenweg 40 P.O. Box 42**
**NL-7550 GD Hengelo (NL)**

(72) Inventor: **Van Meurs, Einac**
**Henry Dunantstraat 80**
**NL-7552 DJ Hengelo (NL)**

(74) Representative: **Kradolfer, Theodorus Albertus Clemens, Drs.**
**Patent Department Hollandse Signaalapparaten B.V. P.O. Box 42**
**NL-7550 GD Hengelo (NL)**

## Description

The invention relates to a method for the cancellation of interference signals originating from a number n of sources situated at different positions during the reception of target return signals in the receiver of a pulse radar, said receiver comprising a main antenna and a main channel for the reception, i.f. detection, sampling and digitising of signals $E_m$ composed of target return signals ($E_m'$) and of interference signals, and n auxiliary antennas and channels for the reception, i.f. detection, sampling and digitising of signals $E_1$, $E_2$, ..., $E_n$ composed of target return signals and interference signals said main and auxiliary antennas being situated at different positions. The invention further relates to the pulse radar apparatus employed to implement said method.

Such a method and a similar pulse radar apparatus provided with a digital side-lobe canceller are known from US—A—4222051 and from an article in IEEE Transactions on Aerospace and Electronic Systems, Vol. AES-14, No. 1, January 1978, pp. 165—171, "A digital open-loop adaptive Processor", by Frank F. Kretschmer Jr and Bernard L. Lewis. This article describes a digital side-lobe canceller for the case when n=1, i.e. the unit is suitable for the cancellation of interference signals originating from one interference source and the receiver therefore comprises one auxiliary channel. To cancel interference signals from n sources, the desired interference cancellation is obtained by applying the latter canceller in a cascaded configuration, as described in US—A—4,222,051. However, in such a cascaded configuration the cancellation of interference signals appears to be strongly dependent upon the phase relations between the signals from one and the same interference source in the different channels (primary and auxiliary channels) of the receiver. The present invention has for its object to considerably reduce this phase dependency, and thereby to enhance the interference cancellation.

According to the invention, the method as set forth in the opening paragraph comprises the steps of:

(a) determining from the received, detected, sampled and digitised signals $E_m$, $E_1$, $E_2$, ..., $E_n$ quantities corresponding to the values $E_1^*E_m$, $E_2^*E_m$, ..., $E_n^*E_m$; $E_1^*E_1$, $E_2^*E_1$, ..., $E_n^*E_1$; $E_1^*E_2$, $E_2^*E_2$, ..., $E_n^*E_2$; ...; $E_1^*E_n$, $E_2^*E_n$, ..., $E_n^*E_n$;

(b) averaging the values in (a) over several samples to the values $\overline{E_1^*E_m}$, $\overline{E_2^*E_m}$, ..., $\overline{E_n^*E_m}$; $\overline{E_1^*E_1}$, $\overline{E_2^*E_1}$, ..., $\overline{E_n^*E_1}$; $\overline{E_1^*E_2}$, $\overline{E_2^*E_2}$, ..., $\overline{E_n^*E_2}$; ...; $\overline{E_1^*E_n}$, $\overline{E_2^*E_n}$, ..., $\overline{E_n^*E_n}$;

(c) solving the following matrix equation for the weights $W_1$, $W_2$, ..., $W_n$:

$$
\begin{pmatrix}
\overline{E_1^*E_1} & \overline{E_1^*E_2} & \cdots & \overline{E_1^*E_n} \\
\overline{E_2^*E_1} & \overline{E_2^*E_2} & \cdots & \overline{E_2^*E_n} \\
\cdot & \cdot & & \cdot \\
\cdot & \cdot & & \cdot \\
\cdot & \cdot & & \cdot \\
\overline{E_n^*E_1} & \overline{E_n^*E_2} & \cdots & \overline{E_n^*E_n}
\end{pmatrix}
\begin{pmatrix}
W_1 \\ W_2 \\ \cdot \\ \cdot \\ \cdot \\ W_n
\end{pmatrix}
=
\begin{pmatrix}
\overline{E_1^*E_m} \\ \overline{E_2^*E_m} \\ \cdot \\ \cdot \\ \cdot \\ \overline{E_n^*E_m}
\end{pmatrix}
$$

(d) determining from the signals $E_m$, $E_1$, $E_2$, ..., $E_n$ delayed over the total processing time of steps (a), (b) and (c) and from weights $W_1$, $W_2$, ..., $W_n$ the target return signals $E_m'=E_m-W_1E_1-W_2E_2-...-W_nE_n$ where $E_k^*$, with k=1, 2, ..., n, is the complex conjugate of $E_k$ and n≥2.

According to another aspect, the invention consists of a pulse radar apparatus as defined in Claim 2.

The weights $W_1$, $W_2$, ..., $W_n$ determined by this method are equal to those obtained in the analogue side-lobe canceller after the settling process. The analogue side-lobe canceller is described in U.S. Patent No. 3,202,990. The settling process however appears to be again strongly dependent upon the phase relations between the signals of one and the same interference source in the receiver; the settling process could therefore be extended considerably, while the extent of interference cancellation could remain far from its optimal value.

For the case when n=1 excluded from the claimed method and apparatus, the method here applied appears to be equivalent to that described in the aforementioned article in "IEEE Transactions on Aerospace and Electronic Systems".

A preferred embodiment of a pulse radar apparatus suitable for the application of the method according to the invention will be dependent upon n. For n=2, a hardware implementation is expected to receive preference, whereas for larger values of n the pulse radar apparatus is to contain a programmable signal processor to execute the processing steps of the method according to the invention.

The invention will now be described with reference to the accompanying drawings, of which:

Fig. 1 is a block diagram showing the operating principle of the pulse radar apparatus for the cancellation of interference signals originating from a number n of sources, according to the invention;

Fig. 2 is a more detailed block diagram of such a digital side-lobe canceller for the case when n=2.

Like parts in the figures are denoted by like reference numbers.

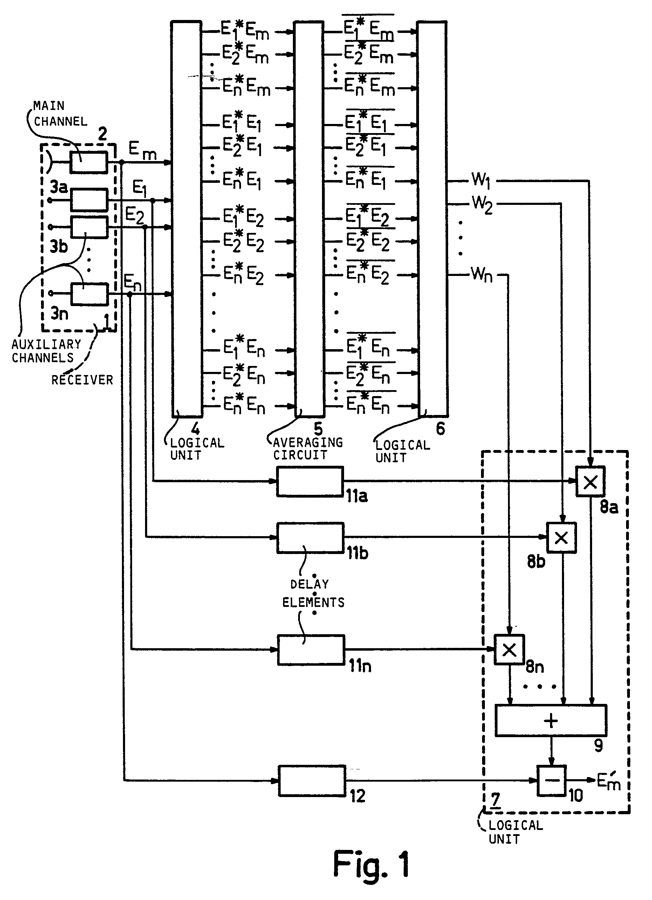

In Fig. 1 the receiver of a pulse radar apparatus is denoted by the numeral 1. Receiver 1 comprises a main channel 2 and n auxiliary channels 3a, 3b, ..., 3n. Both the main and auxiliary channels are suitable for the reception, i.f. detection, sampling and digitising of target return signals and interference signals originating from a maximum number n of sources. The number of auxiliary channels determines the maximum number of interference sources, of which the interference signals can be cancelled. The main channel comprises an antenna directed at the target; this antenna receives in the side lobes signals from interference sources, apart from the target return signals $(E'_m)$ in the major lobe. The target return signals processed in the main channel and interference signals are jointly denoted by $E_m$. The n auxiliary channels comprise in general omni-directional antennas; the target returns processed in these channels and interference signals are jointly denoted by $E_1, E_2, \ldots, E_n$. In hoth the main channel and each of the auxiliary channels a quadrature detector is employed, being a combination of two phase-sensitive detectors used to detect the signals, processed in the channels, with a mutual phase shift of 90°. In this way the real and imaginary components of signals $E_m, E_1, E_2, \ldots, E_n$ are obtained. These components are conventionally sampled and digitised by AD converters contained in each of the channels. Signals $E_k$, where $k=m, 1, 2, \ldots, n$, from channels 2, 3a, 3b, $\ldots$, 3n are thus composed of two digitised signals; $Re(E_k)$ and $Im(E_k)$, per sample.

The pulse radar apparatus contains first means to determine from signals $E_m, E_1, E_2, \ldots, E_n$ the quantities corresponding with values $E_1^*E_m, E_2^*E_m, \ldots, E_n^*E_m; E_1^*E_1, E_2^*E_1, \ldots, E_n^*E_1; E_1^*E_2, E_2^*E_2, \ldots, E_n^*E_2; \ldots; E_1^*E_n, E_2^*E_n, \ldots, E_n^*E_n$. These means are constituted by logical unit 4. Each of the abovementioned quantities is composed of two numerical values, representing the real and the imaginary components. The quantity $E_i^*E_j$ thus comprises the numbers

$$Re(E_i^*E_j)=Re(E_i) \cdot Re(E_j)+Im(E_i) \cdot Im(E_j)$$

and

$$Im(E_i^*E_j)=Re(E_i) \cdot Im(E_j)-Im(E_i) \cdot Re(E_j)$$

for $i=1, 2, \ldots, n$ and $j=m, 1, 2, \ldots, n$.

The pulse radar apparatus also comprises second means to average the quantities $E_1^*E_m, E_2^*E_m, \ldots, E_n^*E_m; E_1^*E_1, E_2^*E_1, \ldots, E_n^*E_1; E_1^*E_2, E_2^*E_2, \ldots, E_n^*E_2; \ldots; E_1^*E_n, E_2^*E_n, \ldots, E_n^*E_n$ over several samples to values $\overline{E_1^*E_m}, \overline{E_2^*E_m}, \ldots, \overline{E_n^*E_m}; \overline{E_1^*E_1}, \overline{E_2^*E_1}, \ldots, \overline{E_n^*E_1}; \overline{E_1^*E_2}, \overline{E_2^*E_2}, \ldots, \overline{E_n^*E_2}; \ldots; \overline{E_1^*E_n}, \overline{E_2^*E_n}, \ldots, \overline{E_n^*E_n}$. These means are constituted by averaging circuit 5. Also in this circuit the real and the imaginary components of $E_i^*E_j$ are averaged separately; the quantity $\overline{E_i^*E_j}$ is thus composed of two digital numerical values $\overline{Re(E_i^*E_j)}$ and $\overline{Im(E_i^*E_j)}$.

The pulse radar apparatus further comprises third means to determine the values $W_1, W_2, \ldots, W_n$ from the matrix equation:

$$
\begin{pmatrix}
\overline{E_1^*E_1} & \overline{E_1^*E_2} & \cdots & \overline{E_1^*E_n} \\
\overline{E_2^*E_1} & \overline{E_2^*E_2} & \cdots & \overline{E_2^*E_n} \\
\vdots & \vdots & \ddots & \vdots \\
\overline{E_n^*E_1} & \overline{E_n^*E_2} & \cdots & \overline{E_n^*E_n}
\end{pmatrix}
\begin{pmatrix}
W_1 \\ W_2 \\ \vdots \\ W_n
\end{pmatrix}
=
\begin{pmatrix}
\overline{E_1^*E_m} \\ \overline{E_2^*E_m} \\ \vdots \\ \overline{E_n^*E_m}
\end{pmatrix}
$$

These third means are constituted by a second logical unit 6, in which the real and the imaginary components of $W_i$, where $i=1, 2, \ldots, n$, are determined separately. Splitting into real and imaginary components allows the above matrix equation to be written as:

$$
\begin{pmatrix}
\overline{Re(E_1^*E_1)} & \cdots & \overline{Re(E_1^*E_n)} & -\overline{Im(E_1^*E_1)} & \cdots & -\overline{Im(E_1^*E_n)} \\
\vdots & & \vdots & \vdots & & \vdots \\
\overline{Re(E_n^*E_1)} & \cdots & \overline{Re(E_n^*E_n)} & -\overline{Im(E_n^*E_1)} & \cdots & -\overline{Im(E_n^*E_n)} \\
\overline{Im(E_1^*E_1)} & \cdots & \overline{Im(E_1^*E_n)} & \overline{Re(E_1^*E_1)} & \cdots & \overline{Re(E_1^*E_n)} \\
\vdots & & \vdots & \vdots & & \vdots \\
\overline{Im(E_n^*E_1)} & \cdots & \overline{Im(E_n^*E_n)} & \overline{Re(E_n^*E_1)} & \cdots & \overline{Re(E_n^*E_n)}
\end{pmatrix}
\begin{pmatrix}
ReW_1 \\ \vdots \\ ReW_n \\ ImW_1 \\ \vdots \\ ImW_n
\end{pmatrix}
=
\begin{pmatrix}
\overline{Re(E_1^*E_m)} \\ \vdots \\ \overline{Re(E_n^*E_m)} \\ \overline{Im(E_1^*E_m)} \\ \vdots \\ \overline{Im(E_n^*E_m)}
\end{pmatrix}
$$

This matrix equation can be solved in a known manner. Logical unit 6 supplies the $W_i$ signals, consisting of two components, $Re(W_i)$ and $Im(W_i)$.

The pulse radar apparatus still further comprises fourth means to determine from signals $E_m$, $E_1$, $E_2$, ..., $E_n$, delayed over the total processing time of the aforementioned steps, and from weights $W_1$, $W_2$, ..., $W_n$, the target return signals $E'_m = E_m - W_1E_1 - W_2E_2 - ... - W_nE_n$, processed in the main channel. The fourth means are constituted by a third logical unit 7. Logical unit 7 consists of multipliers 8a, 8b, ..., 8n, an adder 9 and a subtractor 10. Logical unit 7 is supplied with signals, provided these signals are delayed over a time T corresponding with the time needed for determination of $W_1$, $W_2$, ..., $W_n$ from $E_m$, $E_1$, $E_2$, ..., $E_n$. The pulse radar apparatus thereto comprises delay elements 11a, 11b, ..., 11n and 12, each consisting of two parts, namely for the real and the imaginary components of the signal supplied to the delay element. Multipliers 8a, 8b, ..., 8n determine the products $W_iE_i$, $i=1, 2, ..., n$. The quantities $W_iE_i$ again consist of two numerical values $Re(W_iE_i)$ and $Im(W_iE_i)$. Adder 9 determines the value

$$\sum_{i=1}^{n} W_iE_i;$$

this sum value also consists of two numerical values:

$$\sum_{i=1}^{n} Re(W_iE_i)$$

and

$$\sum_{i=1}^{n} Im(W_iE_i).$$

Subtractor 10 finally establishes the value

$$E'_m = E_m - \sum_{i=1}^{n} W_iE_i,$$

which consists of the numerical values $Re(E'_m)$ and $Im(E'_m)$.

The above first, second, third and fourth means together form the digital side-lobe canceller.

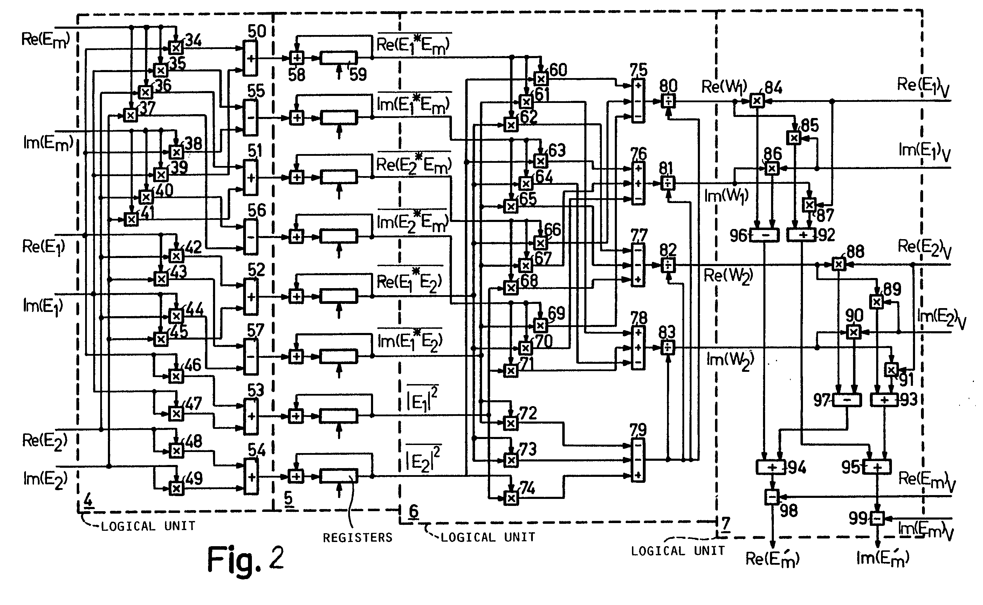

The circuit as shown in Fig. 1 schematically is in practice useful only for small values of n, in particular when n=2. For this case, the digital side-lobe canceller is illustrated in greater detail in Fig. 2.

Fig. 2 illustrates the digital side-lobe canceller in greater detail for the case when n=2. Logical unit 4 here receives signals $Re(E_m)$, $Im(E_m)$, $Re(E_1)$, $Im(E_1)$, $Re(E_2)$ and $Im(E_2)$. Logical unit 4 comprises multipliers 34—49, adders 50—54 and subtractors 55—57, connected as shown in the figure.

The output signals of logical unit 4 are:

$$\left\{ \begin{array}{l} Re(E_1^*E_m) = Re(E_1) \cdot Re(E_m) + Im(E_1) \cdot Im(E_m) \\[1.5ex] Im(E_1^*E_m) = Re(E_1) \cdot Im(E_m) - Im(E_1) \cdot Re(E_m) \\[1.5ex] Re(E_2^*E_m) = Re(E_2) \cdot Re(E_m) + Im(E_2) \cdot Im(E_m) \\[1.5ex] Im(E_2^*E_m) = Re(E_2) \cdot Im(E_m) - Im(E_2) \cdot Re(E_m) \\[1.5ex] Re(E_1^*E_2) = Re(E_1) \cdot Re(E_2) + Im(E_1) \cdot Im(E_2) \\[1.5ex] Im(E_1^*E_2) = Re(E_1) \cdot Im(E_2) - Im(E_1) \cdot Re(E_2) \\[1.5ex] |E_1|^2 = \{Re(E_1)\}^2 + \{Im(E_1)\}^2 \\[1.5ex] |E_2|^2 = \{Re(E_2)\}^2 + \{Im(E_2)\}^2 \end{array} \right.$$

These signals are fed to averaging circuit 5. Circuit 5 again comprises for each signal supplied an adder 58 and a register 59, whose function is similar to that of elements 22 and 23 of Fig. 2. The output signals of averaging circuit 5 are: $\overline{Re(E_1^*E_m)}$, $\overline{Im(E_1^*E_m)}$, $\overline{Re(E_2^*E_m)}$, $\overline{Im(E_2^*E_m)}$, $\overline{Re(E_1^*E_2)}$, $\overline{Im(E_1^*E_2)}$, $\overline{|E_1|^2}$ and $\overline{|E_2|^2}$. These signals are fed to logical unit 6. Unit 6 comprises multipliers 60—74, combining circuits 75—79 and dividers 80—83, connected as shown in the figure. The output signals of logical unit 6 are:

$$Re(W_1)=\frac{\overline{|E_2|^2}\cdot\overline{Re(E_1^*E_m)}-\overline{Re(E_1^*E_2)}\cdot\overline{Re(E_2^*E_m)}-\overline{Im(E_1^*E_2)}\cdot\overline{Im(E_2^*E_m)}}{\overline{|E_1|^2}\cdot\overline{|E_2|^2}-\overline{|E_1^*E_2|^2}}$$

$$Im(W_1)=\frac{\overline{|E_2|^2}\cdot\overline{Im(E_1^*E_m)}-\overline{Re(E_1^*E_2)}\cdot\overline{Im(E_2^*E_m)}+\overline{Im(E_1^*E_2)}\cdot\overline{Re(E_2^*E_m)}}{\overline{|E_1|^2}\cdot\overline{|E_2|^2}-\overline{|E_1^*E_2|^2}}$$

$$Re(W_2)=\frac{\overline{|E_1|^2}\cdot\overline{Re(E_2^*E_m)}-\overline{Re(E_1^*E_2)}\cdot\overline{Re(E_1^*E_m)}-\overline{Im(E_1^*E_2)}\cdot\overline{Im(E_1^*E_m)}}{\overline{|E_1|^2}\cdot\overline{|E_2|^2}-\overline{|E_1^*E_2|^2}}$$

$$Im(W_2)=\frac{\overline{|E_1|^2}\cdot\overline{Im(E_2^*E_m)}-\overline{Re(E_1^*E_2)}\cdot\overline{Im(E_1^*E_m)}+\overline{Im(E_1^*E_2)}\cdot\overline{Re(E_1^*E_m)}}{\overline{|E_1|^2}\cdot\overline{|E_2|^2}-\overline{|E_1^*E_2|^2}}$$

These signals are fed to logical unit 7. Unit 7 comprises multipliers 84—91, adders 92—95 and subtractors 96—99, connected as shown in the figure. Logical unit 7 is also supplied with signals $Re(E_m)_v$, $Im(E_m)_v$, $Re(E_1)_v$, $Im(E_1)_v$, $Re(E_2)_v$ and $Im(E_2)_v$; these are the signals fed to logical unit 4 after being delayed over a time corresponding with the processing time of these signals in logical unit 4, averaging circuit 5 and logical unit 6. The output signals of logical unit 7 are now:

$$Re(E_m')=Re(E_m)_v-[Re(W_1)\cdot Re(E_1)_v-Im(W_1)\cdot Im(E_1)_v]-$$
$$-[Re(W_2)\cdot Re(E_2)_v-Im(W_2)\cdot Im(E_2)_v]$$
$$Im(E_m')=Im(E_m)_v-[Re(W_1)\cdot Im(E_1)_v+Im(W_1)\cdot Re(E_1)_v]-$$
$$-[Re(W_2)\cdot Im(E_2)_v+Im(W_2)\cdot Re(E_2)_v]$$

In the case when n is greater than 2, it is preferred to replace logical units 4, 6 and 7 by a programmable signal processor for implementing the process steps of the methods according to the invention under the control of a suitable program. Obviously, this program will be written on the same mathematical basis as that of the hardware described.

The result of the method here described is such that the interference cancellation obtained is highly independent of the phase relations between the signals of the same interference source in the different channels.

Omnidirectional antennas are utilised in the auxiliary channels; should these antennas be replaced by directional antennas, each of which to be directed to an interference source, a still better interference cancellation and a still greater independence of the phase relations would be obtained.

## Claims

1. Method for the cancellation of interference signals, originating from a number n of sources situated at different positions during the reception of target return signals in the receiver (1) of a pulse radar apparatus, said receiver comprising a main antenna and a main channel (2) arranged for the reception, i.f. detection, sampling and digitising of signals $E_m$, which signals are composed of target return signals and interference signals, and a number n of auxiliary antennas and auxiliary channels (3a, . . . , 3n) arranged for the reception, i.f. detection, sampling and digitising of signals $E_1$, $E_2$, . . . , $E_n$, which signals are composed of target return signals and interference signals, said main and auxiliary antennas being situated at different positions, the method being characterised by the steps of:

(a) determining from the signals $E_m$, $E_1$, $E_2$, . . . , $E_n$ received in the main and auxiliary channels, respectively, quantities corresponding to the values $E_1^*E_m$, $E_2^*E_m$, . . . , $E_n^*E_m$; $E_1^*E_1$, $E_2^*E_1$, . . . , $E_n^*E_1$; $E_1^*E_2$, $E_2^*E_2$, . . . , $E_n^*E_2$; . . . ; $E_1^*E_n$, $E_2^*E_n$, . . . , $E_n^*E_n$;

(b) averaging said values over a plurality of samples to values $\overline{E_1^*E_m}$, $\overline{E_2^*E_m}$, . . . , $\overline{E_n^*E_m}$; $\overline{E_1^*E_1}$, $\overline{E_2^*E_1}$, . . . , $\overline{E_n^*E_1}$; $\overline{E_1^*E_2}$, $\overline{E_2^*E_2}$, . . . , $\overline{E_n^*E_2}$; . . . ; $\overline{E_1^*E_n}$, $\overline{E_2^*E_n}$, . . . , $\overline{E_n^*E_n}$;

(c) solving the following matrix equation for the weights $W_1, W_2, \ldots, W_n$:

$$\begin{pmatrix} \overline{E_1^* E_1} & \overline{E_1^* E_2} & \ldots & \overline{E_1^* E_n} \\ \overline{E_2^* E_1} & \overline{E_2^* E_2} & \ldots & \overline{E_2^* E_n} \\ \cdot & \cdot & & \cdot \\ \cdot & \cdot & & \cdot \\ \cdot & \cdot & & \cdot \\ \overline{E_n^* E_1} & \overline{E_n^* E_2} & \ldots & \overline{E_n^* E_n} \end{pmatrix} \begin{pmatrix} W_1 \\ W_2 \\ \cdot \\ \cdot \\ \cdot \\ W_n \end{pmatrix} = \begin{pmatrix} \overline{E_1^* E_m} \\ \overline{E_2^* E_m} \\ \cdot \\ \cdot \\ \cdot \\ \overline{E_n^* E_m} \end{pmatrix}$$

(d) determining from the signals received in the main and auxiliary channel and delayed over the total processing time of steps (a), (b) and (c) and from the weights $W_1, W_2, \ldots, W_n$ the target return signals expressed by the values

$$E_m' = E_m - W_1 E_1 - W_2 E_2 - \ldots - W_n E_n,$$

where $E_k^*$, with $k = 1, 2, \ldots, n$, is the complex conjugate of $E_k$ and $n \geq 2$.

2. Pulse radar apparatus for cancelling interference signals, originating from a number n of sources situated at different positions during the reception of target return signals in the receiver (1) of the pulse radar apparatus, which receiver comprises a main antenna and a main channel (2) arranged for the reception, i.f. detection, sampling and digitising of signals $E_m$, which signals are composed of target return signals and interference signals, and a number n of auxiliary antennas and auxiliary channels (3a, ..., 3n) arranged for the reception, i.f. detection, sampling and digitising of signals $E_1, E_2, \ldots, E_n$, which signals are composed of target return signals and interference signals, said main and auxiliary antennas being situated at different positions, the pulse radar apparatus being characterised by: first means (4) arranged to determine, from the signals $E_m, E_1, E_2, \ldots, E_n$ received in the main and auxiliary channels, respectively, quantities corresponding to the values $E_1^* E_m, E_2^* E_m, \ldots, E_n^* E_m; E_1^* E_1, E_2^* E_1, \ldots, E_n^* E_1; E_1^* E_2, E_2^* E_2, \ldots, E_n^* E_2; \ldots; E_1^* E_n, E_2^* E_n, \ldots, E_n^* E_n$; second means (5) arranged to average said values over a plurality of samples to values $\overline{E_1^* E_m}, \overline{E_2^* E_m}, \ldots, \overline{E_n^* E_m}; \overline{E_1^* E_1}, \overline{E_2^* E_1}, \ldots, \overline{E_n^* E_1}; \overline{E_1^* E_2}, \overline{E_2^* E_2}, \ldots, \overline{E_n^* E_2}; \ldots; \overline{E_1^* E_n}, \overline{E_2^* E_n}, \ldots, \overline{E_n^* E_n}$; third means (6) arranged to solve the following matrix equations for the weights $W_1, W_2, \ldots, W_n$:

$$\begin{pmatrix} \overline{E_1^* E_1} & \overline{E_1^* E_2} & \ldots & \overline{E_1^* E_n} \\ \overline{E_2^* E_1} & \overline{E_2^* E_2} & \ldots & \overline{E_2^* E_n} \\ \cdot & \cdot & & \cdot \\ \cdot & \cdot & & \cdot \\ \cdot & \cdot & & \cdot \\ \overline{E_n^* E_1} & \overline{E_n^* E_2} & \ldots & \overline{E_n^* E_n} \end{pmatrix} \begin{pmatrix} W_1 \\ W_2 \\ \cdot \\ \cdot \\ \cdot \\ W_n \end{pmatrix} = \begin{pmatrix} \overline{E_1^* E_m} \\ \overline{E_2^* E_m} \\ \cdot \\ \cdot \\ \cdot \\ \overline{E_n^* E_m} \end{pmatrix}$$

and fourth means (7) arranged to determine from the signals received in the main and auxiliary channels and delayed over the total processing time of said first, second and third means on the one hand, and from the weights $W_1, W_2, \ldots, W_n$ on the other, the target return signals indicated by the values

$$E_m' = E_m - W_1 E_1 - W_2 E_2 - \ldots - W_n E_n,$$

where $E_k^*$, with $k = 1, 2, \ldots, n$, is the complex conjugate of $E_k$ and $n \geq 2$.

3. Pulse radar apparatus as claimed in claim 2, characterised in that said first means (4) are constituted by a first logical unit arranged to determine from the values of the real and the imaginary components of the input signals $E_m, E_1, E_2, \ldots, E_n$ the values of the real and the imaginary components of the output signals $E_1^* E_m, E_2^* E_m, \ldots, E_n^* E_m; E_1^* E_1, E_2^* E_1, \ldots, E_n^* E_1; E_1^* E_2, E_2^* E_2, \ldots, E_n^* E_2; \ldots; E_1^* E_n, E_2^* E_n, \ldots, E_n^* E_n$.

4. Pulse radar apparatus as claimed in claim 3, characterised in that said second means (5) comprises for each of the values of the real and the imaginary components of the output signals of said first means (4) an averaging circuit for averaging the values of the supplied signals over several samples.

5. Pulse radar apparatus as claimed in claim 4, characterised in that said third means (6) are constituted by a second logical unit arranged to determine from the values of the real and the imaginary components of the output signals of said second means (5) the values of the real and the imaginary components of the weights $W_1, W_2, \ldots, W_n$.

6. Pulse radar apparatus as claimed in claim 5, characterised in that for each of the real and the imaginary components of the signals received in the main and auxiliary channels there is provided a delay element (11a, ..., 11n; 12) whose delay time corresponds with the processing time of said signals in the first (4), second (5) and third means (6), and that said fourth means (7) are constituted by a third logical unit arranged to determine from the values of the ouptut signals of the delay elements (11a, . . . , 11n; 12) and of said third means (6) the values of the real and the imaginary components of the signal having the value $E'_m$.

7. Pulse radar apparatus as claimed in claim 2, characterised in that said first (4), second (5), third (6) and fourth (7) means jointly are constituted by a programmable signal processor for implementing the process steps of the method as claimed in claim 1 under the control of a suitable program.

## Patentansprüche

1. Verfahren zur Unterdrückung von aus n an unterschiedlichen Standorten befindlichen Störquellen stammenden Störsignalen, während des Empfangs von Zielechosignalen in der Empfangvorrichtung (1) eines Impulsradargeräts, welche Empfangvorrichtung eine Hauptantenne und einen Hauptkanal (2), angeordnet für Empfang, ZF-Detektion, Bemusterung und Digitalisierung von aus Zielechosignalen und Störsignalen zusammengesetzten Signalen $E_m$ sowie n Hilfsantennen und Hilfskanäle (3a, . . . , 3n), angeordnet für Empfang, ZF-Detektion, Bemusterung und Digitaliserung von aus Zielechosignalen und Störsignalen zusammengesetzten Signalen $E_1, E_2, . . . , E_n$ umfasst, welche Haupt- und Hilfsantennen sich an unterschiedlichen Standorten befindet, dadurch gekennzeichnet, dass das Verfahren in nachfolgenden Schritten durchgeführt wird:

(a) Bestimmung von Grössen aus den erwähnten, im Hauptkanal bzw. den Hilfskanälen empfangenen Signalen $E_m, E_1, E_2, . . . , E_n$, welche Grössen mit den Werte $E_1^*E_m, E_2^*E_m, . . . , E_n^*E_m; E_1^*E_1, E_2^*E_1, . . . , E_n^*E_1; E_1^*E_2, E_2^*E_2, . . . , E_n^*E_2; . . . ; E_1^*E_n, E_2^*E_n, . . . , E_n^*E_n$, übereinstimmen;

(b) Mittelung der letztgenannten Werte über mehrere Muster zu Werten $\overline{E_1^*E_m}, \overline{E_2^*E_m}, . . . , \overline{E_n^*E_m}; \overline{E_1^*E_1}, \overline{E_2^*E_1}, . . . , \overline{E_n^*E_1}; \overline{E_1^*E_2}, \overline{E_2^*E_2}, . . . , \overline{E_n^*E_2}; . . . ; \overline{E_1^*E_n}, \overline{E_2^*E_n}, . . . , \overline{E_n^*E_n};$

(c) Lösung der Wertigkeiten $W_1, W_2, . . . , W_n$ aus der Matrix-Gleichung:

$$
\begin{pmatrix}
\overline{E_1^*E_1} & \overline{E_1^*E_2} & \cdots & \overline{E_1^*E_n} \\
\overline{E_2^*E_1} & \overline{E_2^*E_2} & \cdots & \overline{E_2^*E_n} \\
\cdot & \cdot & & \cdot \\
\cdot & \cdot & & \cdot \\
\cdot & \cdot & & \cdot \\
\overline{E_n^*E_1} & \overline{E_n^*E_2} & \cdots & \overline{E_n^*E_n}
\end{pmatrix}
\begin{pmatrix}
W_1 \\
W_2 \\
\cdot \\
\cdot \\
\cdot \\
W_n
\end{pmatrix}
=
\begin{pmatrix}
\overline{E_1^*E_m} \\
\overline{E_2^*E_m} \\
\cdot \\
\cdot \\
\cdot \\
\overline{E_n^*E_m}
\end{pmatrix}
$$

(d) Bestimmung von den aus den im Haupt- und Hilfskanal empfangenen und über die Gesamtverarbeitungszeit der Schritte (a), (b) und (c) verzögerten Signalen sowie aus den Wertigkeiten $W_1, W_2, . . . , W_n$ abgeleiteten und mit

$$E'_m = E_m - W_1 E_1 - W_2 E_2 - . . . - W_n E_n,$$

bezeichneten Zielechosignalen, wobei $E_k^*$, mit $k = 1, 2, . . . , n$, die konjugiert komplexe Grösse von $E_k$ und $n \geq 2$ darstellt.

2. Impulsradargerät zur Unterdrück von aus n an unterschiedlichen Standorten befindlichen Störquellen stammenden Störsignalen, während des Empfangs von Zielechosignalen in der zum Impulsradargerät gehörenden Empfangvorrichtung (1), welche Empfangvorrichtung eine Hauptantenne und einen Hauptkanal (2), angeordnet für Empfang, ZF-Detektion, Bemusterung und Digitalisierung von aus Zielechosignal und Störsignalen zusammengesetzten Signalen $E_m$ sowie n Hilfsantennen und Hilfskanäle (3a, . . . , 3n), angeordnet für Empfang, ZF-Detektion, Bemusterung und Digitalisierung von aus Zielechosignalen und Störsignalen zusammengesetzten Signalen $E_1, E_2, . . . , E_n$ umfasst, welche Haupt- und Hilfsantennen sich an unterschiedlichen Standorten befinden, dadurch gekennzeichnet, dass erste Mittel (4) vorhanden sind, angeordnet zur Bestimmung aus den im Hauptkanal und in den Hilfskanälen empfangenen Signalen $E_m, E_1, E_2, . . . , E_n$ von Grössen, welche mit den Werte $E_1^*E_m, E_2^*E_m, E_n^*E_m; E_1^*E_1, E_2^*E_1, . . . , E_n^*E_1; E_1^*E_2, E_2^*E_2, . . . , E_n^*E_2; . . . ; E_1^*E_n, E_2^*E_n, . . . , E_n^*E_n$, übereinstimmen; sowie zweite Mittel (5) angeordnet zur Mittelung der letztgenannten Werte über mehrere Muster zu den Werten $\overline{E_1^*E_m}, \overline{E_2^*E_m}, . . . , \overline{E_n^*E_m}; \overline{E_1^*E_1}, \overline{E_2^*E_1}, . . . , \overline{E_n^*E_1}; \overline{E_1^*E_2}, \overline{E_2^*E_2}, . . . , \overline{E_n^*E_2}; . . . ; \overline{E_1^*E_n}, \overline{E_2^*E_n}, . . . , \overline{E_n^*E_n};$ und dritte Mittel (6), angeordnet zur Lösung der Wertigkeiten $W_1, W_2, . . . , W_n$ aus der Matrixgleichung:

$$
\begin{pmatrix}
\overline{E_1^*E_1} & \overline{E_1^*E_2} & \cdots & \overline{E_1^*E_n} \\
\overline{E_2^*E_1} & \overline{E_2^*E_2} & \cdots & \overline{E_2^*E_n} \\
\cdot & \cdot & & \cdot \\
\cdot & \cdot & & \cdot \\
\cdot & \cdot & & \cdot \\
\overline{E_n^*E_1} & \overline{E_n^*E_2} & \cdots & \overline{E_n^*E_n}
\end{pmatrix}
\begin{pmatrix}
W_1 \\
W_2 \\
\cdot \\
\cdot \\
\cdot \\
W_n
\end{pmatrix}
=
\begin{pmatrix}
\overline{E_1^*E_m} \\
\overline{E_2^*E_m} \\
\cdot \\
\cdot \\
\cdot \\
\overline{E_n^*E_m}
\end{pmatrix}
$$

**0 050 384**

und schliesslich vierte Mittel (7), angeordnet zur Bestimmung von aus den im Hauptkanal und in den Hilfskanälen empfangenen und über die Gesamtbearbeitungszeit der erwähnten ersten, zweiten, dritten und vierten Mittel verzögerten Signalen einerseits und zur Bestimmung aus den Wertigkeiten $W_1$, $W_2$, ..., $W_n$ der mit

$$E'_m = E_m - W_1 E_1 - W_2 E_2 - \ldots - W_n E_n$$

bezeichneten Zielechosignale andererseits, wobei $E^*_k$ mit $k=1, 2, \ldots, n$, die konjugiert komplexe Grösse von $E_k$ und $n \geq 2$ darstellt.

3. Impulsradargerät gemäss Anspruch 2, dadurch gekennzeichnet, dass die erwähnten, ersten Mittel (4) aus einer ersten Logikeinheit bestehen, mit derer Hilfe aus den Werten der reellen und imaginaren Teile der Eingangssignale $E_m$, $E_1$, $E_2$, ..., $E_n$ die Werte der reellen und imaginaren Teile der Ausgangssignale $E^*_1 E_m$, $E^*_2 E_m$, ..., $E^*_n E_m$; $E^*_1 E_1$, $E^*_2 E_1$, ..., $E^*_n E_1$; $E^*_1 E_2$, $E^*_2 E_2$, ..., $E^*_n E_2$; ...; $E^*_1 E_n$, $E^*_2 E_n$, ..., $E^*_n E_n$ bestimmt werden.

4. Impulsradargerät gemäss Anspruch 3, dadurch gekennzeichnet, dass die erwähnten, zweiten Mittel (5) für jeden der Werte der reellen und imaginaren Teile der Ausgangssignale der ersten Mittel (4) eine Mittelungsschaltung umfassen, mit dem Zweck die Werte der zugeführten Signale über mehrere Muster zu mitteln.

5. Impulsradargerät gemäss Anspruch 4, dadurch gekennzeichnet, dass die erwähnten, dritten Mittel (6) aus einer zweiten Logikeinheit bestehen, mit derer Hilfe aus den Werten der reellen und imaginaren Teile der Ausgangssignale der zweiten Mittel (5) die Werte der reellen und imaginaren Teile der Wertigkeiten $W_1$, $W_2$, ..., $W_n$ bestimmt werden.

6. Impulsradargerät gemäss Anspruch 5, dadurch gekennzeichnet, dass für jeden Teil der reellen und imaginaren Teile der im Hauptkanal und in den Hilfskanälen empfangenen Signale ein Verzögerungselement (11a, ..., 11n; 12) vorgesehen ist, von dem die Verzögerungzeit mit der Verarbeitungszeit dieser Signale in den ersten (4), zweiten (5) und dritten Mitteln (6) übereinstimmt, und dass die vierten Mittel (7) aus einer dritten Logikeinheit bestehen, angeordnet mit dem Zweck aus den Werten der Ausgangssignale der Verzögerungselemente (11a, ..., 11n; 12) und aus den Werten der erwähnten dritten Mittel (6) die Werte der reellen und imaginaren Teile des mit $E'_m$ bezeichneten Signals zu bestimmen.

7. Impulsradargerät gemäss anspruch 2, dadurch gekennzeichnet, dass die ersten (4), zweiten (5), dritten (6) und vierten Mittel (7) gemeinsam eine programmierbare Signalverarbeitungseinheit umfassen, welche mittels Steuerung eines speziellen Programms die unter Anspruch 1 erwähnten Verfahrensschritte realisiert.

**Revendications**

1. Procédé d'annulation de signaux parasites provenant d'un nombre n de sources situées en diverses positions pendant la reception de signaux de retour d'une cible dans le récepteur (1) d'un appareil radar à impulsions, ledit récepteur comprenant une antenne principale et un canal principal (2) aménagé pour la réception, la détection f.i., l'échantillonnage et la mise sous forme numérique des signaux $E_m$, ces signaux étant composés des signaux de retour de la cible et des signaux parasites, et un nombre n d'antennes et de canaux auxiliaires (3a, ..., 3n) aménagés pour la réception, la détection f.i., l'échantillonnage et la mise sous forme numérique de signaux $(E_1, E_2, \ldots, E_n)$, ces signaux étant composés des signaux de retour de la cible et des signaux parasites, lesdites antennes principale et auxiliaires étant situées en différentes positions, le procédé étant caractérisé par les opérations consistant à:

(a) déterminer à partir des signaux $E_m$, $E_1$, $E_2$, ..., $E_n$ reçus respectivement dans les canaux principal et auxiliaires des quantités correspondant aux valeurs $E^*_1 E_m$, $E^*_2 E_m$, ..., $E^*_n E_m$; $E^*_1 E_1$, $E^*_2 E_1$, ..., $E^*_n E_1$; $E^*_1 E_2$, $E^*_2 E_2$, ..., $E^*_n E_2$; ...; $E^*_1 E_n$, $E^*_2 E_n$, ..., $E^*_n E_n$;

(b) établir la moyenne des valeurs en (a) sur plusieurs échantillons pour parvenir aux valeurs $\overline{E^*_1 E_m}$, $\overline{E^*_2 E_m}$, ..., $\overline{E^*_n E_m}$; $\overline{E^*_1 E_1}$, $\overline{E^*_2 E_1}$, ..., $\overline{E^*_n E_1}$; $\overline{E^*_1 E_2}$, $\overline{E^*_2 E_2}$, ..., $\overline{E^*_n E_2}$; ...; $\overline{E^*_1 E_n}$, $\overline{E^*_2 E_n}$, ..., $\overline{E^*_n E_n}$;

(c) résoudre l'équation matricielle suivante pour les poids $W_1$, $W_2$, ..., $W_n$:

$$\begin{pmatrix} \overline{E^*_1 E_1} & \overline{E^*_1 E_2} & \ldots & \overline{E^*_1 E_n} \\ \overline{E^*_2 E_1} & \overline{E^*_2 E_2} & \ldots & \overline{E^*_2 E_n} \\ \cdot & \cdot & & \cdot \\ \cdot & \cdot & & \cdot \\ \cdot & \cdot & & \cdot \\ \overline{E^*_n E_1} & \overline{E^*_n E_2} & \ldots & \overline{E^*_n E_n} \end{pmatrix} \begin{pmatrix} W_1 \\ W_2 \\ \cdot \\ \cdot \\ \cdot \\ W_n \end{pmatrix} = \begin{pmatrix} \overline{E^*_1 E_m} \\ \overline{E^*_2 E_m} \\ \cdot \\ \cdot \\ \cdot \\ \overline{E^*_n E_m} \end{pmatrix}$$

(d) déterminer à partir des signaux reçus dans les canaux principal et auxiliaire et retardés pendant la durée totale du traitement des opérations (a), (b) et (c) et à partir des poids $W_1$, $W_2$, ..., $W_n$ les signaux de retour de la cible exprimés par les valeurs

8

$$E'_m = E_m - W_1E_1 - W_2E_2 - \ldots - W_nE_n,$$

où $E^*_k$, avec $k=1, 2, \ldots, n$, est le conjugué complexe de $E_k$ et $n \geq 2$.

2. Appareil radar à impulsions pour annuler des signaux parasites, provenant d'un nombre n de sources situées en des positions différentes pendant la réception des signaux de retour de la cible dans le récepteur (1) de l'appareil radar à impulsions, récepteur qui comprend une antenne principale et un canal principal (2) aménagé pour la réception, la détection f.i., l'échantillonnage et la mise sous forme numérique des signaux $E_m$, ces signaux étant composés des signaux de rétour de la cible et des signaux parasites, et un nombre n d'antennes auxiliaires et de canaux auxiliaires (3a, ..., 3n) aménagés pour la réception, la détection f.i., l'échantillonnage et la mise sous forme numérique des signaux ($E_1, E_2, \ldots, E_n$), ces signaux étant composés par les signaux de retour de la cible et les signaux parasites, ladite antenne principale et lesdites antennes auxiliaires étant situées en diverses positions, l'appareil radar à impulsions étant caractérisé par: de premiers moyens (4) aménagés pour déterminer à partir des signaux $E_m, E_1, E_2, \ldots, E_n$ reçus dans le canal principal et les canaux auxiliaires respectivement, des quantités correspondant aux valeurs $E^*_1E_m, E^*_2E_m, \ldots, E^*_nE_m; E^*_1E_1, E^*_2E_1, \ldots, E^*_nE_1; E^*_1E_2, E^*_2E_2, \ldots, E^*_nE_2; \ldots; E^*_1E_n, E^*_2E_n, \ldots, E^*_nE_n;$ de seconds moyens (5) aménagés pour établir la moyenne desdites valeurs sur un ensemble d'échantillons pour parvenir aux valeurs $\overline{E^*_1E_m}, \overline{E^*_2E_m}, \ldots, \overline{E^*_nE_m}; \overline{E^*_1E_1}, \overline{E^*_2E_1}, \ldots, \overline{E^*_nE_1}; \overline{E^*_1E_2}, \overline{E^*_2E_2}, \ldots, \overline{E^*_nE_2}; \ldots; \overline{E^*_1E_n}, \overline{E^*_2E_n}, \ldots, \overline{E^*_nE_n};$ de troisièmes moyens (6) aménagés pour résoudre l'équation matricielle suivante pour les poids $W_1, W_2, \ldots, W_n$:

$$
\begin{pmatrix}
\overline{E^*_1E_1} & \overline{E^*_1E_2} & \cdots & \overline{E^*_1E_n} \\
\overline{E^*_2E_1} & \overline{E^*_2E_2} & \cdots & \overline{E^*_2E_n} \\
\cdot & \cdot & & \cdot \\
\cdot & \cdot & & \cdot \\
\cdot & \cdot & & \cdot \\
\overline{E^*_nE_1} & \overline{E^*_nE_2} & \cdots & \overline{E^*_nE_n}
\end{pmatrix}
\begin{pmatrix}
W_1 \\
W_2 \\
\cdot \\
\cdot \\
\cdot \\
W_n
\end{pmatrix}
=
\begin{pmatrix}
\overline{E^*_1E_m} \\
\overline{E^*_2E_m} \\
\cdot \\
\cdot \\
\cdot \\
\overline{E^*_nE_m}
\end{pmatrix}
$$

et de quatrièmes moyens (7) aménagés pour déterminer à partir des signaux reçus dans le canal principal et les canaux auxiliaires et retardés de la durée totale du traitement desdits premiers, seconds et troisièmes moyens d'une part, et des poids $W_1, W_2, \ldots, W_n$ d'autre part, les signaux de retour de la cible, indiqués par les valeurs

$$E'_m = E_m - W_1E_1 - W_2E_2 - \ldots - W_nE_n,$$

où $E^*_k$, avec $k=1, 2, \ldots, n$, est le conjugué complexe de $E_k$ et $n \geq 2$.

3. Appareil radar à impulsions selon la revendication 2, caractérisé en ce que lesdits premiers moyens (4) sont constitués par une première unité logique aménagée pour déterminer à partir des valeurs de composantes réelle et imaginaire des signaux d'entrée $E_m, E_1, E_2, \ldots, E_n$ les valeurs des composantes réelle et imaginaire des signaux de sortie $E^*_1E_m, E^*_2E_m, \ldots, E^*_nE_m; E^*_1E_1, E^*_2E_1, \ldots, E^*_nE_1; E^*_1E_2, E^*_2E_2, \ldots, E^*_nE_2; \ldots; E^*_1E_n, E^*_2E_n, \ldots, E^*_nE_n.$

4. Appareil radar à impulsions selon la revendication 3, caractérisé en ce que lesdits seconds moyens (5) comprennent pour chacune des valeurs des composantes réelle et imaginaire des signaux de sortie desdits premiers moyens (4) un circuit d'établissement de moyenne pour établir les moyennes des valeurs des signaux fournis sur plusieurs échantillons.

5. Appareil radar à impulsions selon la revendication 4, caractérisé en ce que lesdits troisièmes moyens (6) sont constitués par une seconde unité logique aménagée pour déterminer à partir des valeurs des composantes réelle et imaginaire des signaux de sortie desdits seconds moyens (5) les valeurs des composantes réelle et imaginaire de poids $W_1, W_2, \ldots, W_n$.

6. Appareil radar à impulsions selon la revendication 5, caractérisé en ce que pour chacune des composantes réelle et imaginaire des signaux reçus dans le canal principal et les canaux auxiliaires est prévu un élément à retard (11a, ..., 11n; 12) dont le retard correspond à la durée de traitement desdits signaux dans les premiers (4), seconds (5) et troisièmes (6) moyens, et en ce que lesdits quatrièmes moyens (7) sont constitués par une troisième unité logique aménagée pour déterminer à partir des valeurs des signaux de sortie des éléments à retard (11a, ..., 11n; 12) et desdits troisièmes moyens (6) les valeurs des composantes réelle et imaginaire des signaux ayant la valeur $E'_m$.

7. Appareil radar à impulsions selon la revendication 2, caractérisé en ce que lesdits premiers (4), seconds (5), troisièmes (6) et quatrièmes (7) moyens forment en commun un processeur de signaux programmable pour mettre en oeuvre les opérations de traitement du procédé selon la revendication 1 sous la commande d'un programme approprié.

Fig. 1

Fig. 2